# EUROPEAN PATENT APPLICATION

(11) **EP 2 942 549 A1**
(43) Date of publication of application: **11.11.2015**
(21) Application number: 12890772.2
(22) Date of filing: 25.12.2012
(51) Int. Cl.: F16H 61/04

(54) **TRANSMISSION CONTROL SYSTEM**

(71) Applicant: Ikeya Formula Co., Ltd., Tochigi 322-0251 (JP)
(72) Inventor: IKEYA, Shinji, Kanuma-shi Tochigi 322-0251 (JP)
(74) Representative: Oppermann, Frank
(86) International application number: PCT/JP2012/008265
(87) International publication number: WO 2014/102855

(57) **Abstract**

Provided is a transmission control system capable of preventing an unnecessary slip or a shock in a clutch and shifting gears by switching dog clutches while transmitting driving force.

The transmission control system is characterized by a transmission 1003 that shifts a transmitted output from a starting clutch 1005 by switching dog clutches 47, 49, 51 under a driving force transmission condition, a clutch actuator 1011 that performs the fastening adjustment to the starting clutch 1005, a shift actuator 1009 that switches the dog clutches 47, 49, 51 according to a shift instruction signal, and a controlling unit 1007 that controls the clutch actuator 1011 according to an input of the shift instruction signal to reduce fastening force of the starting clutch 1005 and conducts the shift actuator 1009 to selectively switch the dog clutches 47, 49, 51 when a difference is generated between the detected input rotational speed and the detected output rotational speed of the starting clutch 1005.

## Description

### TECHNICAL FIELD

The present invention relates to a transmission control system that allows gears of an automobile or the like to be manually or automatically shifted, in particular selectively switches and connects on dog clutches in a driving force transmission state, thereby to perform a transmission output for a transmitted output from a starting clutch.

### BACKGROUND TECHNOLOGY

Generally, a transmission for a vehicle using a single clutch inevitably involves a gear shift shock, delay in acceleration, and the like due to interruption of driving force when shifting gears. In a construction machinery, an agriculture vehicle, or the like with large running resistance and small speed energy, it becomes stopped as soon as driving force is interrupted when shifting gears and may be hard to shift the gears.

On the other hand, it is known that a twin-clutch transmission involves no interruption of driving force to prevent a gear shift shock or delay in acceleration.

However, there is a problem that the twin-clutch transmission is complicated in structure and heavy in weight.

In contrast, a seamless-shift transmission that shifts gears by switching dog clutches while transmitting driving force draws attention as one capable of reducing weight.

As a structure of such a seamless-shift transmission, there is one disclosed in Patent Document 1.

The seamless-shift transmission is provided with between upper and lower shifting-gears three first burettes and three second burettes that engage with an input shaft and move according to shift operation. On the upper and lower shifting-gears, meshing teeth are formed, and at both ends of the first and second burettes, complicated different faces are formed in front and rear in a rotational direction.

The first and second burettes are configured to move toward the upper or lower shifting-gear through a spring relative to operation of a selecting fork.

With such a configuration, for example, when shifting into the lower gear, the three first burettes engage with the meshing teeth of the lower shifting-gear, and thereafter, the remaining three second burettes engage with the meshing teeth.

When shifting into the upper gear, the three second burettes engage with the meshing teeth of the second gear, and thereafter, the remaining three first burettes engage with the meshing teeth.

Then, with the first burettes and second burettes and the selecting operation through the spring, it involves no interruption of driving force to prevent a gear shift shock or delay in acceleration and can reduce the weight.

In such a seamless-shift transmission based on a manual transmission, however, it is necessary to appropriately control coupling force of the starting clutch (hereinafter referred to as "clutch") in order to absorb a shock due to inconsistency between the number of revolutions of the engine and the vehicle speed when shifting gears.

To achieve such coupling force, the number of revolutions of the engine and the accelerator position are detected immediately before shifting gears to calculate the transmitting torque of the clutch at that time and control a clutch actuator for adjusting the fastening force.

However, there is a problem that the friction coefficient of the clutch continuously changes and therefore it cannot adequately absorb an unnecessary slip or a shock in the clutch due to the inconsistency between the number of revolutions of the engine and the vehicle speed.

### PRIOR ART DOCUMENT

### NON-PATENT DOCUMENT

NON-PATENT DOCUMENT 1: June 2005 Racecar Enginnering (www.racecar-engineering.com)

### DISCLOSURE OF INVENTION

### PROBLEMS TO BE SOLVED BY THE INVENTION

A problem to be solved is that it cannot adequately absorb the unnecessary slip or the shock in the clutch due to the inconsistency between the number of revolutions of the engine and the vehicle speed even if gear shifting can be performed by switching dog clutches while transmitting driving force.

### MEANS TO SOLVE THE PROBLEM

The present invention provides a transmission control system, capable of preventing an unnecessary slip or a shock in a clutch and shifting gears by switching dog clutches while transmitting driving force. The transmission control system that shifts gears by switching dog clutches while transmitting driving force, comprises a starting clutch that transmits and outputs a torque from an engine according to fastening adjustment, a transmission that selectively switches dog clutches for a plurality of stages of shifting-gears relatively rotatably supported with a driving force transmission shaft to perform a transmission output on a transmitted output from the starting clutch, a clutch actuator that performs the fastening adjustment to the starting clutch, a shift actuator that switches the dog clutches according to a shift instruction signal, an input rotational speed sensor that detects input rotational speed of the starting clutch and an output rotational speed sensor that detects output rotational speed of the starting clutch, and a controlling unit that controls the clutch actuator according to an input of the shift instruction signal to reduce fastening force of the starting clutch and conducts the shift actuator to selectively switch the dog clutches when a difference is generated between the detected input rotational speed and the detected output rotational speed of the starting clutch.

### EFFECT OF THE INVENTION

The present invention, according to the above-identified means, involves no interruption of driving force to prevent a gear shift shock or delay in acceleration with the transmission control system that shifts gears by switching dog clutches while transmitting driving force and simultaneously prevents an unnecessary slip or a shock based on inconsistency between the number of revolutions of an engine and vehicle speed.

### BRIEF DESCRIPTION OF DRAWINGS

[FIG. 1] It is a block diagram illustrating a transmission control system. (Embodiment 1)
[FIG. 2] It is a configuration diagram illustrating the transmission control system. (Embodiment 1)
[FIG. 3] It is a flowchart of the transmission control system. (Embodiment 1)
[FIG. 4] It is an enlarged sectional shape partly illustrating a transmission. (Embodiment 1)
[FIG. 5] It is a development view illustrating a cam groove and a cam projection. (Embodiment 1)
[FIG. 6] It is development view illustrating the cam groove and the cam projection. (Embodiment 1)
[FIG. 7] It is a perspective view illustrating a relationship between a clutch cam ring and a clutch ring. (Embodiment 1)
[FIG. 8] It is a perspective view illustrating the relationship between the clutch cam ring and the clutch ring. (Embodiment 1)
[FIG. 9] It is a perspective view illustrating the clutch cam ring. (Embodiment 1)
[FIG. 10] It is a perspective view illustrating the clutch ring. (Embodiment 1)
[FIG. 11] It is a schematic view illustrating a relationship among a shift fork, a check part, and a dog clutch. (Embodiment 1)
[FIG. 12] It is a schematic view illustrating the relationship among the shift fork, the check part, and the dog clutch. (Embodiment 1)
[FIG. 13] It is a development view illustrating the clutch ring. (Embodiment 1)
[FIG. 14] They partly illustrate meshing of a dog clutch, (a) is a development view of a coast meshing position and (b) is a development view of a standby meshing position. (Embodiment 1)
[FIG. 15] It is a schematic view illustrating meshing of a fourth gear of the transmission when shifting up a gear. (Embodiment 1)
[FIG. 16] It is a schematic view illustrating a release-standby position of a fourth speed clutch ring of the transmission when shifting up a gear. (Embodiment 1)
[FIG. 17] It is a schematic view illustrating a state completely shifting into a fifth speed. (Embodiment 1)
[FIG. 18] It is a schematic view illustrating a state where the fourth speed and the fifth speed are in neutral when shifting down a gear. (Embodiment 1)
[FIG. 19] It is an explanatory view for operation of drum grooves when shifting up or down a gear. (Embodiment 1)

### EMBODIMENT FOR CARRYING OUT THE INVENTION

In order to prevent an unnecessary slip or a shock in a clutch while shifting gears by switching dog clutches under a driving force transmission state, it makes provision for a starting clutch 1005 that transmits and outputs a torque from an engine 1013 according to fastening adjustment, a transmission 1003 that selectively switches under a driving force transmission state dog clutches 47, 49, 51 for a plurality of stages of shifting-gears 19, 21, 23, 25, 27, 29 relatively rotatably supported with driving force transmission shafts 3, 5 to perform a transmission output on a transmitted output from the starting clutch 1005, a clutch actuator 1011 that performs the fastening adjustment to the starting clutch 1005, a shift actuator 1009 that switches the dog clutches 47, 49, 51 according to a shift instruction signal, an input rotational speed sensor 1025 that detects input rotational speed of the starting clutch 1005 and an output rotational speed sensor 1027 that detects output rotational speed of the starting clutch, and a controlling unit 1007 that controls the clutch actuator 1011 according to an input of the shift instruction signal to reduce fastening force of the starting clutch 1005 and conducts the shift actuator 1009 to selectively switch the dog clutches 47, 49, 51 when a difference is generated between the detected input rotational speed and the detected output rotational speed of the starting clutch 1005.

### EMBODIMENT 1

### [TRANSMISSION CONTROL SYSTEM]

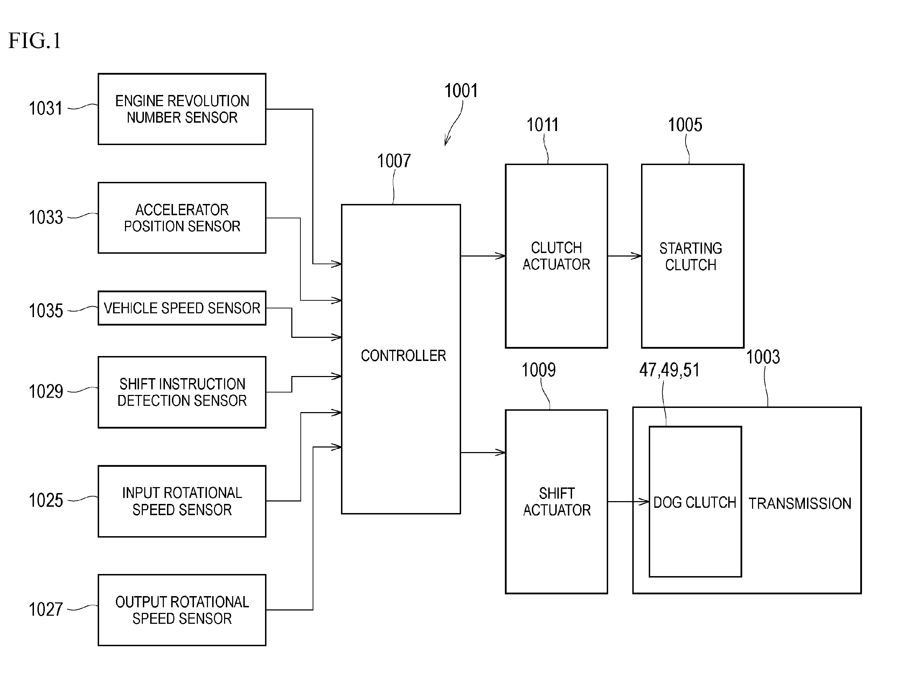

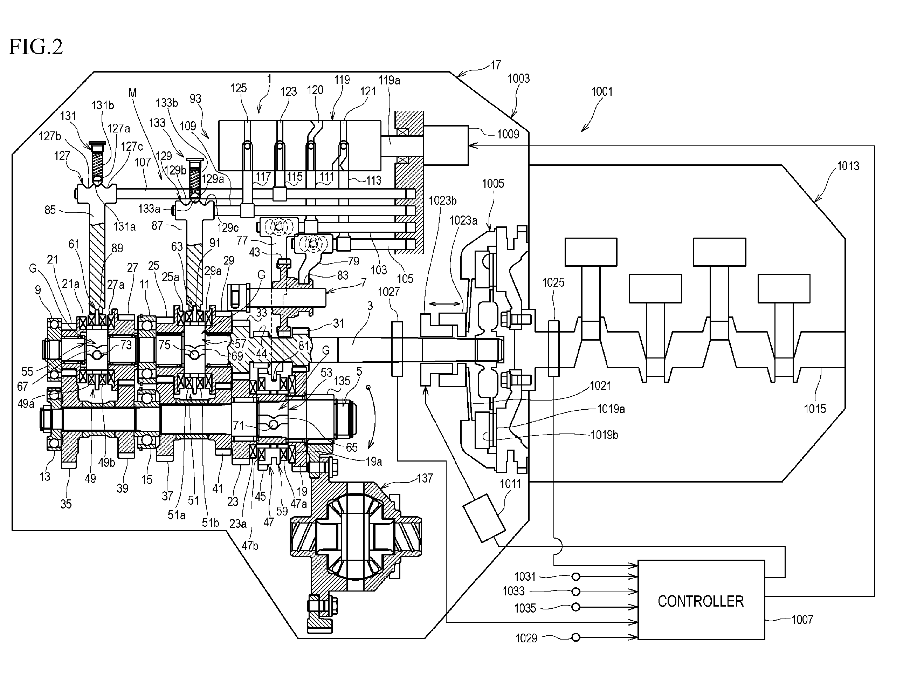

FIG. 1 is a block diagram illustrating the transmission control system, and FIG. 2 is a configuration diagram illustrating the transmission control system.

The transmission control system 1001 according to the embodiment of FIGs. 1 and 2 achieving the present invention performs with the controller 1007 as a controlling unit transmission control of the starting clutch 1005 and the transmission 1003 serving as a so-called seamless-shift transmission that shifts gears by switching the dog clutches while transmitting the driving force.

The transmission 1003 is provided with the dog clutches 47, 49, 51 that are switched by the shift actuator 1009. The shift actuator 1009 is configured by, for example, an electric motor that is attached to an input shaft 119a of a shift drum 119 and is connected to an output port of the controller 1007 through a driving circuit (not illustrated).

The starting clutch 1005 is configured so that the fastening adjustment of the starting clutch is performed by the clutch actuator 1011. The starting clutch 1005 is provided between a crank shaft 1015 of the engine 1013 and a main shaft 3 of the transmission 1003 to transmit and interrupt the output of the engine 1013 to the transmission 1003.

The starting clutch 1005 performs fastening adjustment on a pair of friction members 1019a, 1019b with a spring 1021 to adjust the output from the engine 1013. The spring 1021 is connected to a movable sleeve 1023a on an inner diameter side. The movable sleeve 1023a is configured to be adjusted in an axial movement relative to a fixed sleeve 1023b.

On the fixed sleeve 1023b side, the clutch actuator 1011 configured by a solenoid is provided. With energizing control to the clutch actuator 1011, it axially moves the movable sleeve 1023a against urging force of the spring 1021. The clutch actuator 1011 is connected to the output port of the controller 1007 through the driving circuit (not illustrated).

In addition, although the clutch actuator 1011 is apart from the fixed sleeve 1023b in the drawings, the clutch actuator 1011 and the fixed sleeve 1023b are integrally formed.

Further, the starting clutch 1005 may be configured so that the fastening adjustment is performed by an electrically-controllable hydraulic actuator or the like.

The controller 1007 is configured by, for example, a microcomputer and is provided with a CPU, a ROM, a RAM and the like. To an input port of the controller 1007, the input rotational speed sensor 1025, the output rotational speed sensor 1027, a shift instruction detection sensor 1029, an engine revolution number sensor 1031, an accelerator position sensor 1033, and a vehicle speed sensor 1035 are connected.

The input rotational speed sensor 1025 detects the input rotational speed of the starting clutch 1005 and inputs it to the controlling unit, thereby to detect rotational speed of the crank shaft 1015. The output rotational speed sensor 1027 detects the output rotational speed of the starting clutch 1005 and inputs it to the controller 1007, thereby to detect rotational speed of the main shaft 3.

The shift instruction detection sensor 1029 detects a signal of a manual or automatic shift instruction and inputs it to the controller 1007.

For example, the shift instruction detection sensor 1029 detects an operation signal when shifting up or down a gear by operation of a shift lever in a manual mode and inputs it to the controller 1007 as an operation signal of the shift lever.

The automatic shift instruction signal is based on the number of revolutions of the engine, the acceleration position, and the vehicle speed that are input to the controller 1007 and an appropriate shifting-stage is calculated based on inputs of the engine revolution number detection signal, the accelerator position detection signal, and the vehicle speed detection signal from the engine revolution number sensor 1031, the accelerator position sensor 1033, and the vehicle speed sensor 1035.

In addition, the embodiment allows manual and automatic gear shifting to be switched, however, may allow any one of manual and automatic gear shifting.

Then, the controller 1007 gradually reduces the fastening force of the starting clutch 1005 by controlling the clutch actuator 1011 when the shift instruction signal is input to the controller 1007. When a difference is generated with this reduction between the input rotational speed and the output rotational speed of the starting clutch 1005 that are input by the input rotational speed sensor 1025 and the output rotational speed sensor 1027, the shift actuator 1009 selectively switches the dog clutches 47, 49, and 51.

After the completion of the selectively-switching of the dog clutches 47, 49, or 51, the clutch actuator 1011 performs 100% fastening and connection of the starting clutch 1005.

### [TRANSMISSION CONTROL AND STARTING CLUTCH CONTROL]

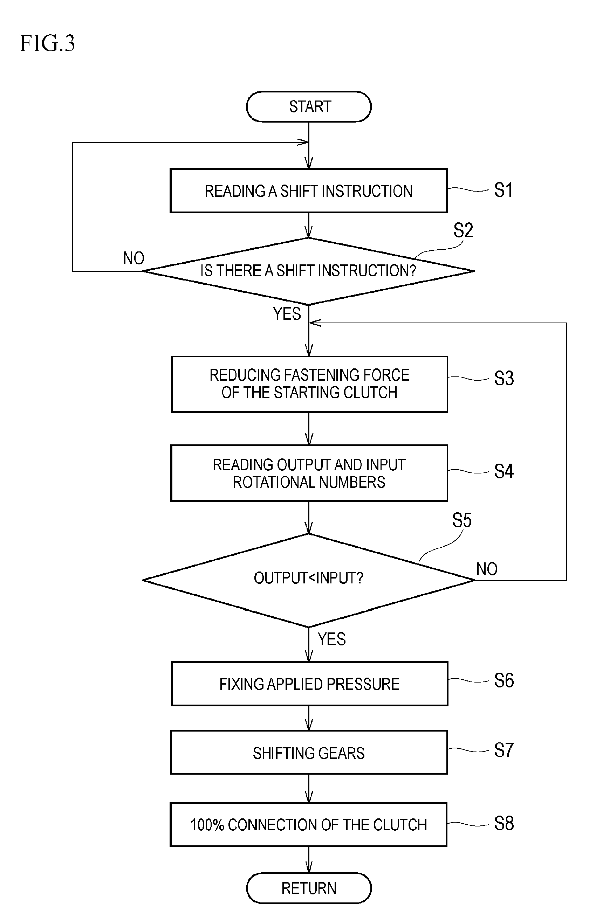

FIG. 3 is a flowchart of the transmission control system.

The flowchart of FIG. 3 is executed according to, for example, a start of the engine 1013.

In Step S1 (hereinafter, "Step S" is simply referred to as "S."), a shift instruction signal is read according a process of "reading a shift instruction." In this reading, the signal of the manual or automatic shift instruction is read to transition to S2.

In S2, it is determined whether there is a shift instruction signal from the read signal according to a determination process, "Is there a shift instruction?" If there is the shift instruction (YES), the process transitions to S3. If there is no shift instruction (NO), the process returns back to S1.

In S3, the controller 1007 controls energization to the clutch actuator 11 to adjust the axial movement of the movable sleeve 1023a toward the fixed sleeve 1023b and gradually reduce the fastening force of the starting clutch 1005 according to a process of "reducing fastening force of the starting clutch." Then, the process transitions to S4.

In S4, the input rotational speed and the output rotational speed of the starting clutch 1005 input by the input rotational speed sensor 1025 and the output rotational speed sensor 1027 are read according to a process of "reading output and input rotational numbers" to transition to S5.

In S5, a determination process of "output<input?" is carried out. At the point of that a difference is generated between the input rotational speed and the output rotational speed of the starting clutch 1005 (YES), i.e., when the output rotational speed starts to drop behind the input rotational speed, the process transitions to S6. During no difference caused (NO), the process returns back to S3 to repeat S3, S4 and S5.

In S6, the reduction of the starting clutch fastening force is discontinued according to a process of "fixing applied pressure," thereby to fix the control of the clutch actuator 1011 until the switching is completed. Then, the process transitions to S7.

In S7, the controller 1007 performs energizing control to the shift actuator 1009 according to a process of "shifting gears," thereby to selectively switch the dog clutches 47, 49, and 51 according to the shift instruction signal to transition to S8.

In this case, the embodiment makes a transition from the start of reducing the fastening force of the starting clutch 1005 with the clutch actuator 1011 to the start of switching the dog clutches 47, 49, and 51 with the shift actuator 1009 under 1 second over 0 second.

The control of the clutch actuator 1011, therefore, hardly affects on the transmission control.

In S8, the controller 1007 stops the energizing control of the clutch actuator 1011 according to a process of "100% connection of the clutch" and the spring 1021 returns due to its own urging force, to fasten the friction members 1019a and 1019b and put the clutch in a 100% connection state. Then, the process returns.

As mentioned above, the embodiment involves no interruption of the driving force to prevent a gear shift shock or delay in acceleration with the transmission control system that shifts gears by switching the dog clutches 47, 49, and 51 while transmitting the driving force and simultaneously prevents an unnecessary slip or a shock based on inconsistency between the number of revolutions of the engine and the vehicle speed.

### [SEAMLESS SHIFT]

A configuration and operation for the seamless shift of the transmission 1003 will be explained.

The transmission 1003 selectively switches under the driving force transmission state the dog clutches for a plurality of stages of the shifting-gears relatively rotatably supported with the main shaft 3 and a counter shaft 5 serving as driving force transmission shafts to perform the transmission output on the transmitted output from the starting clutch.

The dog clutches 47, 49, and 51 of the transmission 1003 are provided with a plurality of clutch rings 59, 61 and 63 axially movable on the main shaft 3 and the counter shaft 5. Second and fifth shifting-gears 21 and 27, fourth and sixth shifting-gears 25 and 29 that take two speeds or more away from each other are arranged on both sides of the respective clutch rings in the axial direction and first and third shifting-gears 19 and 23 are arranged in the same way so that each one clutch ring selectively meshes with any one of the shifting-gears on the both sides to connect it with the driving force transmission shafts.

The shift actuator 1009 switches selectively-meshing of the clutch rings 59, 61 and 63 relative to the shifting-gears.

Guide parts G are provided between the respective clutch rings 59, 61 and 63 and the driving force transmission shafts so that, when any one pair of the clutch rings 59, 61 and 63 simultaneously mesh with the respective shifting-gears of an upper stage and a lower stage, axial forces oriented in differential directions of a further-meshing-engagement direction and a meshing-release direction are generated on the respective shifting-gears of the upper stage and the lower stage.

Hereinafter, the details will be explained.

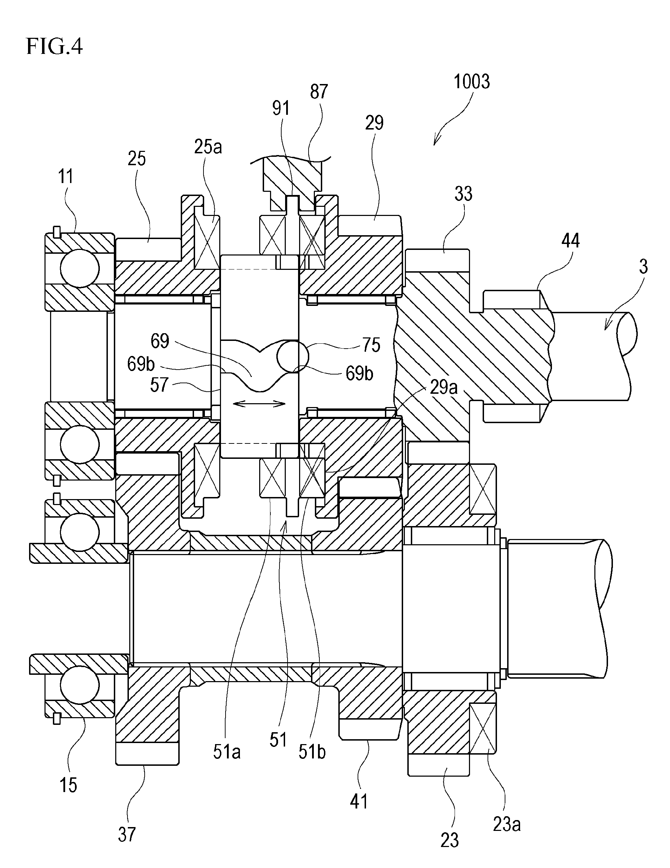

FIG. 4 is an enlarged sectional shape partly illustrating the transmission.

As illustrated in FIGs. 2 and 4, the transmission 1003 is provided with the main shaft 3 and the counter shaft 5 as the driving force transmission shafts, and an idler shaft 7. These main shaft 3 and counter shaft 5 are rotatably supported with a transmission case 17 through bearings 9, 11, 13, 15 etc. The idler shaft 7 is fixed on the transmission case 17 side.

The first gear 19, the second gear 21, the third gear 23, the fourth gear 25, the fifth gear 27 and the sixth gear 29 as multiple stage shifting-gears are fixed to or relatively rotatably supported with the main shaft 3 or the counter shaft 5.

The first gear 19 and third gear 23 on the counter shaft 5 mesh with output gears 31 and 33 of the main shaft 3, and the second gear 21, fourth gear 25, fifth gear 27, and sixth gear 29 on the main shaft 3 mesh with input gears 35, 37, 39, and 41 of the counter shaft 5, respectively.

A reverse idler 43 on the idler shaft 7 is arranged to be able to mesh with an output gear 44 on the main shaft 3 or an input gear 45 on the counter shaft 5 through an axial movement.

The first gear 19, the second gear 21, the third gear 23, the fourth gear 25, the fifth gear 27 and the sixth gear 29 are able to be connected to the main shaft 3 or the counter shaft 5 by the first to third dog clutches 47, 49, and 51 to perform a transmission output.

The first to third dog clutches 47, 49, and 51 shift gears to upper stages of the multiple stage shifting-gears by switching the first to third dog clutches 47, 49, and 51. Namely, the first gear 19, the second gear 21, the third gear 23, the fourth gear 25, the fifth gear 27 and the sixth gear 29 as the multiple stage shifting-gears are arranged to be shifted by switching the first to third dog clutches 47, 49, and 51.

For example, shifting from the first gear 19 into the second gear 21 is performed by switching the first and second dog clutches 47 and 49.

The first to third dog clutches 47, 49, and 51 has basically the same structure and are provided with clutch cam rings 53, 55, and 57, the clutch rings 59, 61, and 63, clutch teeth 47a, 47b, 49a, 49b, 51a, 51b, 19a, 21a, 23a, 25a, 27a, and 29a formed on respective opposing faces of the clutch rings 59, 61, and 63 and the first gear 19 to the sixth gear 29.

The clutch rings 59, 61, and 63, therefore, move in an axial direction of the main shaft 3 or the counter shaft 5 to make connection for the transmission output by selectively meshing the clutch teeth 47a, 47b, 49a, 49b, 51a, 51b, 19a, 21a, 23a, 25a, 27a, and 29a.

On the clutch cam rings 53, 55, and 57 of the first to third dog clutches 47, 49, and 51, v-shaped cam grooves 65, 67, and 69 are formed. The clutch cam ring 53 of the first dog clutch 47 is connected to and is rotatable integrally with the counter shaft 5. The clutch cam rings 55 and 57 of the second and third dog clutches 49 and 51 are connected to and are rotatable integrally with the main shaft 3.

The clutch rings 59, 61, and 63 of the first to third dog clutches 47, 49, and 51 are arranged on and fitted to outer peripheries of the clutch cam rings 53, 55, and 57, and are axially movable. On inner peripheries of the clutch rings 59, 61, and 63, cam projections 71, 73, and 75 are formed to be fitted into and guided by the cam grooves 65, 67, and 69.

On the clutch ring 59 and reverse idler 43, circumferential recessed stripes 81 and 83 with which below-mentioned shift forks 77 and 79 engage are formed. On an outer periphery of the clutch ring 59, the input gear 45 are further formed. On the clutch rings 61 and 63, circumferential protruding stripes 89 and 91 with which below-mentioned shift forks 85 and 87 engage are formed.

The first to third dog clutches 47, 49, and 51 are selectively operated by a shift operation part 93. The reverse idler 43 is also operated by the shift operation part 93.

The shift operation part 93 is provided inside the transmission case 17 and has a plurality of the shift forks 77, 79, 85, and 87, a plurality of shift rods 103, 105, 107, and 109, shift arms 111, 113, 115, and 117, and a shift drum 119.

The shift forks 77, 79, 85, and 87 are provided for and interlock with the respective first to third dog clutches 47, 49, 51 and reverse idler 43 and interlock with the respective dog clutches 47, 49, 51 and reverse idler 43.

The shift rods 103, 105, 107 and 109 support the respective shift forks 77, 79, 85, and 87.

The shift arms 111, 113, 115, and 117 are connected to the respective shift rods 103, 105, 107, and 109.

The shift drum 119 is provided with shift grooves 120, 121, 123, and 125 and projections at proximal ends of the shift arms 111, 113, 115, and 117 that engage with these shift grooves 120, 121, 123, and 125.

Between the shift forks 85 and 87 side and the transmission case 17 side, concave-and-convex parts 127 and 129 and check parts 131 and 133 are provided. Between the shift fork 99 side and the transmission case 17 side, a concave-and-convex part and a check part that have the same structures are provided and are omitted from the drawings.

The concave-and-convex parts 127 and 129 are formed on the shift forks 95 and 97 and have chevron positioning recesses 127a, 127b, 127c, 129a, 129b, and 129c. The positioning recesses 127a and 129a correspond to a neutral position and the positioning recesses 127b, 127c, 129b, and 129c correspond to coast meshing positions.

The check parts 131 and 133 are supported on the transmission case 17 side and push check balls 131a and 133a through check springs 131b and 133b so that the check balls engage with the concave-and-convex parts 127 and 129 by elastic force. With these engagements, the first to third dog clutches 47, 49, and 51 can be positioned at the neutral position and the coast meshing positions.

An output of the transmission 1003 is performed from a front differential gear 137 that meshes with an output gear 135 of the counter shaft 5.

Namely, when the shift drum 119 is driven and rotated by a shift motor (not illustrated) according to a manual operating signal of the shift lever or the accelerator position signal, the vehicle speed signal and the like based on an operation of an accelerator pedal, the shift rods 103, 105, 107, and 109 are selectively driven in the axial direction through any of the shift arms 111, 113, 115, and 117 according to guidance of the shift grooves 120, 121, 123, and 125.

With the selectively-driving of the shift rods 103, 105, 107, and 109, the first to third dog clutches 47, 49, 51 or reverse idler 43 are selectively operated through any of the shift forks 77, 79, 85, and 87. Due to this selective operation, the first gear 19 to sixth gear 29 or reverse idler 43 selectively operates to shift up or down a gear, or change into reverse.

In the shift operation part 93 and the first to third dog clutches 47, 49, and 51, an internally-circulating torque is mechanically inescapably generated regardless of an output torque of the engine when meshing of the dog clutches of an upper stage and a lower stage are doubly performed through the operation of the shift operation part 93. Guide parts G are provided for respective stages and function to move the dog clutch of the upper stage in a further-meshing-engagement direction by a driving torque acting thereon due to the internally-circulating torque and to move the dog clutch of the lower stage toward a neutral direction by a coasting torque acting thereon due to the internally-circulating torque to release the meshing engagement.

The guide parts G provide the first to third dog clutches 47, 49, and 51 with the cam grooves 65, 67, and 69 and the cam projections 71, 73, and 75 as mentioned above. Through the cam grooves 65, 67, and 69 and the cam projections 71, 73, and 75, the driving torque and coasting torque are transmitted to the first gear 19, second gear 21, third gear 23, forth gear 25, fifth gear 27, sixth gear 29 in the coast meshing positions of the first to third dog clutches 47, 49, and 51. Only in release-standby positions where the dog clutches shift away from the coast meshing positions toward meshing-release sides, the meshing are guided toward the neutral directions due to the coasting torque.

The guide parts G provide the shift operation part 93 with a locomotive transmission mechanism M and provide the first to third dog clutches 47, 49, and 51 with below-mentioned driving inclined faces F on only positive driving torque transmission sides.

The driving inclined faces F generate locomotive according to the driving torque, to displace the clutch rings 59, 61, and 63 of the first to third dog clutches 47, 49, and 51 to the release-standby positions. The inclined faces F may be formed on the clutch teeth on the gear side to provide the similar function.

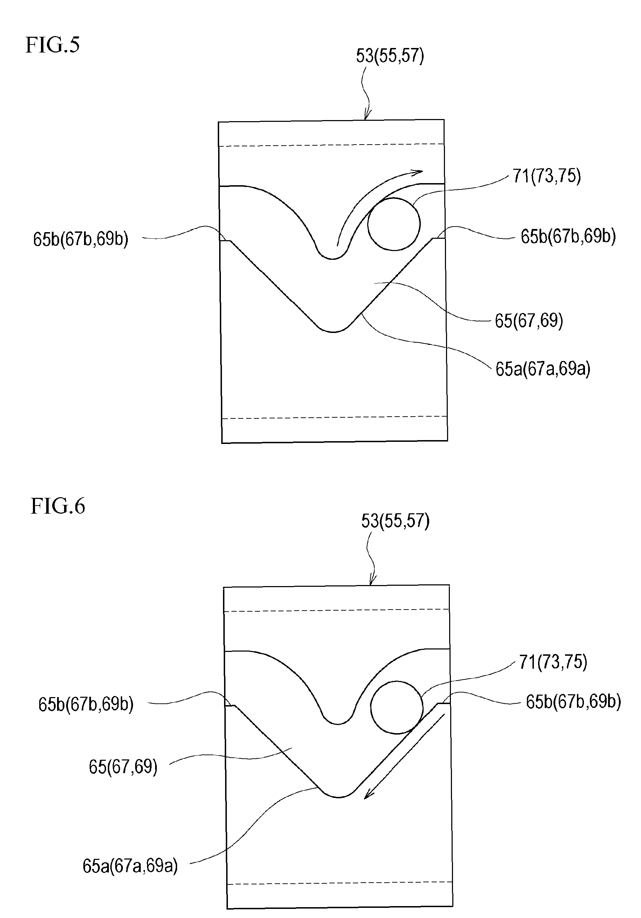

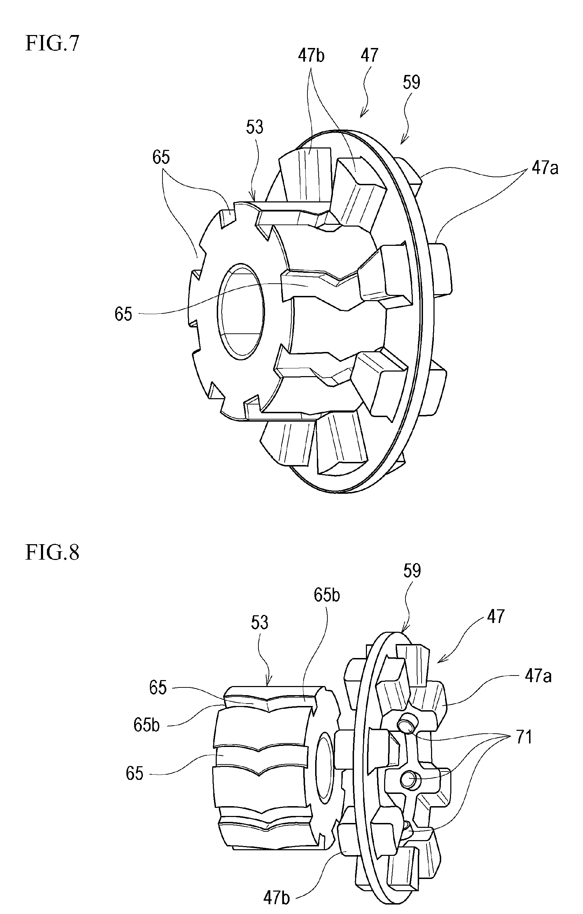

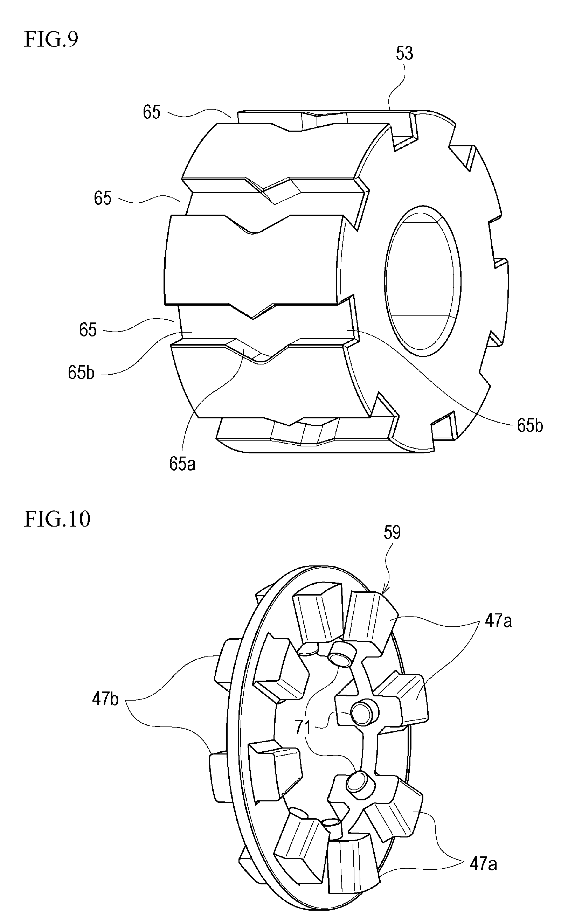

FIGs. 5 and 6 are development views illustrating the cam groove and the cam projection, FIGs. 7 and 8 are perspective views illustrating the relationship between the clutch cam ring and the clutch ring, FIG. 9 is a perspective view illustrating the clutch cam ring, and FIG. 10 is a perspective view illustrating the clutch ring.

As illustrated in FIGs. 5-10, a plurality of the cam grooves 65, 67, and 69 are formed on outer peripheries of the clutch cam rings 53, 55, and 57 at regular intervals in a circumferential direction. The cam grooves 65, 67, and 69 has v-shaped parts 65a, 67a, and 69a formed at axial central portions that include portions corresponding to the neutral positions and level portions 65b, 67b, and 69b formed on both sides thereof.

Accordingly, in a case where the dog clutches 47, 49, and 51 are at non-release-standby positions, the cam projections 71, 73, and 75 are positioned at the level portions 65b, 67b, and 69b, so that the dog clutches keep the meshing without generating thrust toward the neutral positions even if the coasting torque acts.

The cam projections 71, 73, and 75 radially protrude from the inner peripheries of the clutch rings 59, 61, and 63 at regular intervals in a circumferential direction so that the cam projections are inserted into and guided by the respective cam grooves 65, 67, and 69.

Therefore, in the coast meshing positions of the first to third dog clutches 47, 49, and 51, the cam projections 71, 73, and 75 are positioned at the level portions 65b, 67b, and 69b, thereby transmitting the driving torque or coasting torque to the first gear 19, second gear 21, third gear 23, fourth gear 25, fifth gear 27, and sixth gear 29.

In the release-standby positions of the first to third dog clutches 47, 49, and 51, the cam projections 71, 73, and 75 are positioned at the v-shaped portions 65a, 67a, and 69a, so that the meshing are guided toward the neutral direction due to the coasting torque as illustrated in FIG. 6.

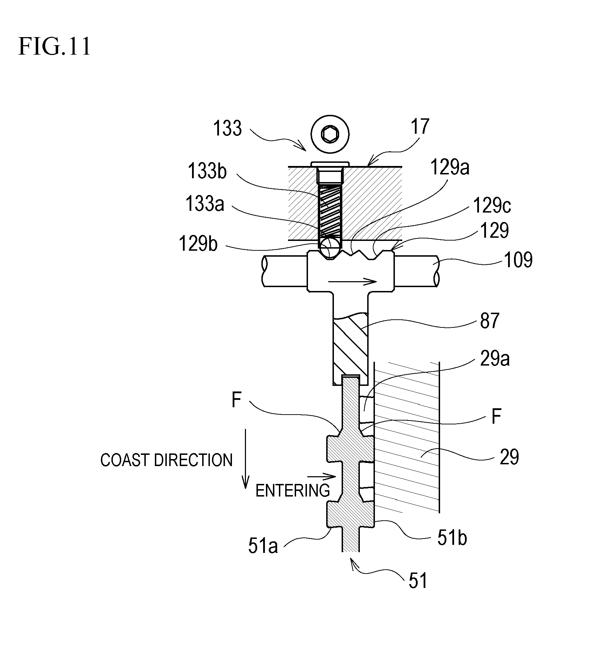

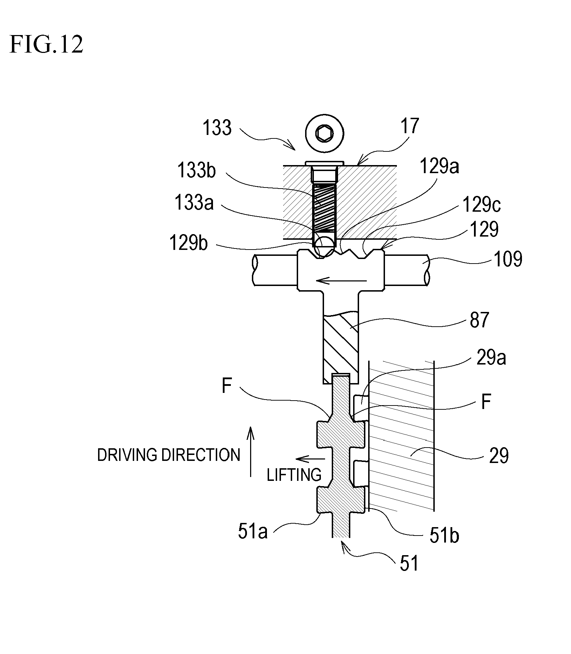

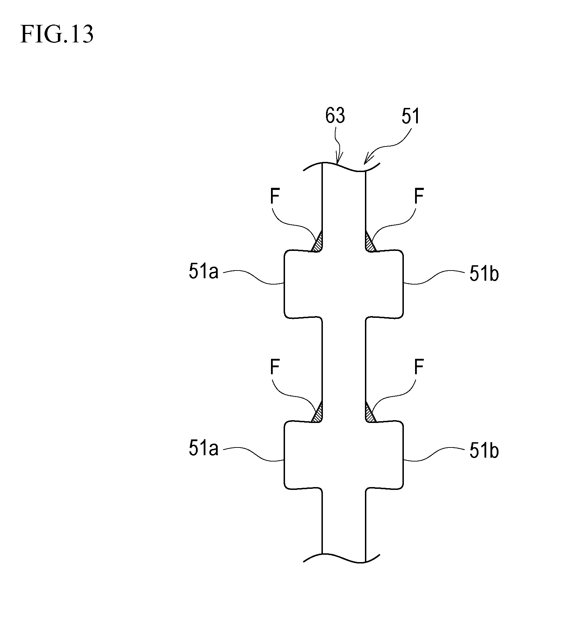

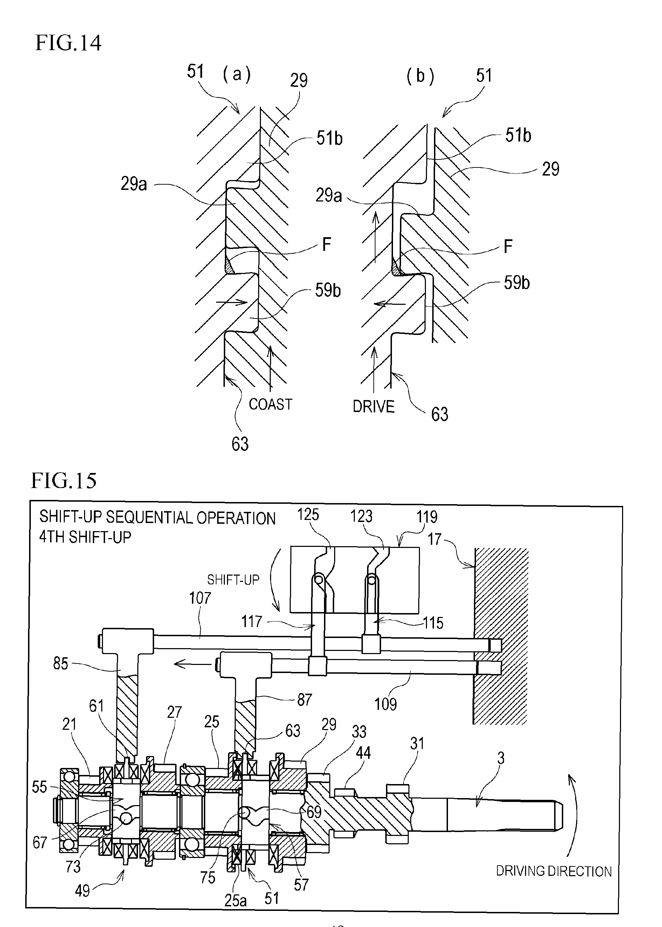

FIGs. 11 and 12 are schematic views illustrating the relationship among the shift fork, the check part, and the dog clutch, FIG. 13 is a development view illustrating the clutch ring, and FIG. 14 illustrates meshing of a dog clutch in which (a) is a development view of a coast meshing position and (b) is a development view of a standby meshing position. In FIGs. 11-14, the third dog clutch will be explained. Since the same applies to the first and second dog clutches, duplicative explanation is omitted.

As illustrated in Figs. 11-14, in the third meshing gear 51, the clutch teeth 51a and 51b of the clutch ring 63 and the clutch teeth 25a and 29a of the fourth gear 25 and the sixth gear 29 have mutual spaces that are larger than tooth widths in a circumferential arrangement. A circumferentially-meshing face of each of the clutch teeth 51a, 51b, 25a, and 29a is inclined so that a root of a tooth is slightly narrowed.

At roots of the clutch teeth 51a and 51b of the clutch ring 63, the driving inclined faces F are formed on meshing faces that receive the driving torque, respectively.

Therefore, if the third dog clutch 51 meshes and connects with the sixth gear 29 and the driving torque acts on the dog clutch, the clutch ring 63 is displaced due to the driving inclined faces F as illustrated in Fig. 14(b). At this time, the recess 129b of the shift fork 87 pushes back the ball 133a to apply pressure on the spring 131b and store energy in the spring as illustrated in Fig. 12.

The displacement is allowed by providing the shift groove 125 with an appropriate looseness in the axial direction relative to the guide of the shift arm 117. According to this displacement, the clutch ring 63 becomes positioned at the release-standby position where the clutch ring is displaced away from the coast meshing position of FIGs. 11 and 14(a) toward the meshing-release side.

Next, if the driving torque turns into the coasting torque, the teeth are pushed toward an opposite side and put out of the faces F illustrated in FIG. 14. Accordingly, the meshing becomes deeper by the action of the recess 129b and the ball 133a due to the aforementioned energy of the spring 133b as illustrated in FIG. 14(a). In this state, since the cam projection 75 in FIGs. 2 and 4 is positioned at the level portion 69b on the axial end side of the cam groove 69, no thrust acting on the clutch ring 63 is generated.

On the other hand, if it starts to shift a gear to the upper stage, the shift drum 119 in FIG. 2 rotates to eliminate the aforementioned looseness relative to the guide of the shift arm 117 according to a shape of the shift groove 125 of the lower stage, thereby maintaining the release-standby position. At this time, the projection 75 is shifted from the level portion 69b to an inclined face portion of the cam groove 69, the coasting torque is applied to the lower stage gear according to the meshing of the upper stage gear, and a thrust component for a movement toward the neutral direction is obtained with the inclined face of the cam groove 69. Particular shifting action will be explained later.

### [SHIFT-UP]

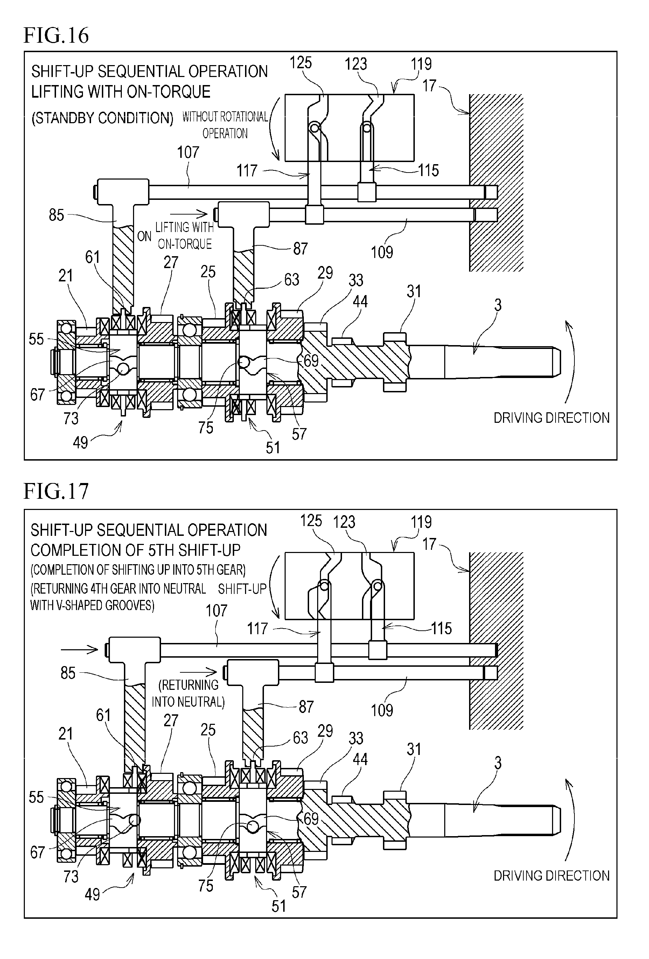

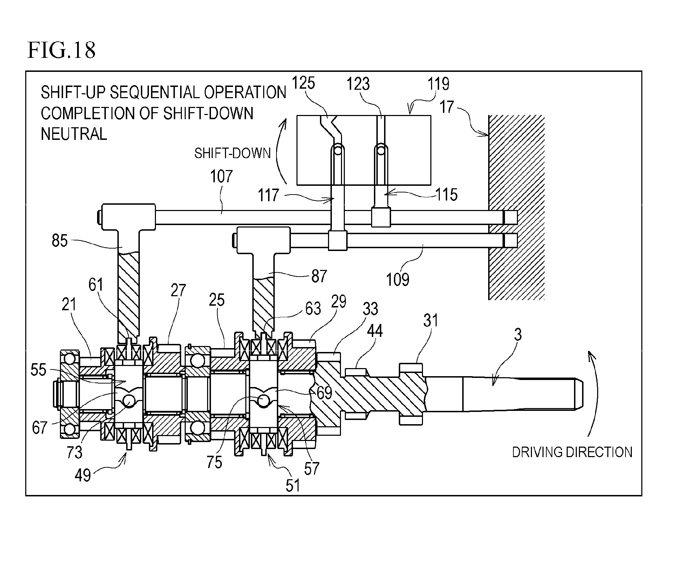

FIG. 15 is a schematic view illustrating the meshing of the fourth gear of the transmission when shifting up a gear, FIG. 16 is a schematic view illustrating the release-standby position of the fourth speed clutch ring of the transmission when shifting up a gear, FIG. 17 is a schematic view illustrating the state completely shifting into the fifth speed, and FIG. 18 is a schematic view illustrating the state where the fourth speed and the fifth speed are in neutral when shifting down a gear.

Where, shifting up into the fifth speed (upper stage) from the fourth speed (lower stage) will be mainly explained for ease of explanation. The same applies to shift-up into the other stages.

### (Fourth speed→Fifth speed)

FIGs. 15-18 illustrate operations at the time of shifting up a gear. Since the drive torque is applied to the clutch teeth 25a for the fourth speed of FIG. 15, the clutch ring 63 becomes in the release-standby position illustrated in FIG. 16 due to the function of the inclined faces F as mentioned above. Namely, the projections 75 of the clutch ring 63 in the fourth speed position are positioned on the inclined faces of the cam grooves 69. At this time, if the shift-up operation into the fifth speed is carried out by the rotation of the shift drum 119, the shift groove 123 functions to operate the clutch ring 61 through the shift arm 115, shift rod 107, and shift fork 85. With this operation, the clutch ring 61 meshes with the fifth gear 27 so that the fourth gear 25 and the fifth gear 27 simultaneously perform the meshing.

At this time, the coasting torque occurs on the fourth speed side and the driving torque occurs on the fifth speed side due to the internally-circulating torque that is mechanically inescapably generated by the simultaneous meshing regardless of the output torque of the engine. Through the function of the inclined faces of the cam grooves 69 and 67, these torques generate the thrust on the clutch ring 63 in the fourth speed position toward the neutral direction that is rightward in the drawings and the thrust on the clutch ring 61 in the fifth speed position toward the direction that is rightward in the drawings. Accordingly, the clutch rings 63 and 61 are shifted to the respective given positions and the shift-up operation into the fifth speed is completed as illustrated in FIG. 17.

As characteristic of the embodiment, when the clutch rings 59, 61, and 63 axially move, the clutch ring on the lower stage rotates to be relatively delayed and the clutch ring on the upper stage rotates to be relatively antecedent with respect to the cam rings 53, 55, and 57 rotating integrally with the main shaft 3 or the counter shaft 5 according to the function of the inclined faces of the cam grooves 65, 67, and 69. It eliminates relative speed among the clutch teeth 19a, 21a, 23a, 25a, 27a, and 29a of the lower and upper gears that rotate under this condition to permit the doubly-meshing, and generates a synchronization effect to absorb a gear shift shock.

### [SHIFT-UP WHILE ENGINE BRAKING OCCURS]

If the shift-up is performed while engine braking occurs, the clutch ring 63 in the fourth speed position is shifted in a condition where the ring is not positioned at the release-standby position. At this time, the clutch ring 61 meshes with the fifth gear 27 by the shift-up operation so that a further coasting torque acts on the fourth speed. Since the clutch ring 63, however, in the fourth speed position is not at the release-standby position, the thrust component toward the neutral direction is not generated.

However, (1) an absolute value of the coasting torque at the time of the engine braking is smaller than that of the torque at the time of acceleration so that a frictional force acting on the dog clutch is small; and (2) a strong thrust component is generated on the clutch ring 61 in the fifth speed position by the function of the inclined face of the cam groove 67.

This thrust is transmitted through the shift fork 85, the shift rod 107 and the shift drum 119 in the fifth speed position to the shift rod 109 and the shift fork 87 in the fourth speed position, to drive the clutch ring 63 in the forth speed position toward the neutral direction that is rightward in the drawings. Therefore, nothing hinders the shift-up in such a situation.

If the driving torque acts with absence of the inclined faces F, the clutch ring 63 is not positioned at the release-standby position. Even in this case, however, the clutch ring 63 is forcibly shifted toward the neutral direction due to the transmission of the force from the shift mechanism in the fifth speed position.

Accordingly, the inclined faces F are not fundamental to the present invention, and they are for smoothly shifting gears.

Further, the embodiment performs the shift operation by the shift grooves 120, 121, 123, and 125 of the shift drum 119 (cylindrical cam). Instead, the present invention is achieved by a planer cam, driving each shift rod by controlled hydraulic pressure, an electric motor, or air pressure etc.

### [SHIFT DOWN FIFTH SPEED→FOURTH SPEED]

When reducing speed, there is no need for the seamless shift unlike the acceleration. This is because the reducing speed is mainly performed by brakes, the output from the engine is not related to the reducing speed basically, and there is no problem even if the driving torque from the engine or engine braking torque is interrupted. Accordingly, similar to a standard manual transmission, the clutch ring 61 in the fifth speed position of the upper stage is shifted into neutral illustrated in FIG. 18 to interrupt the input, and then the clutch ring 61 meshes with the fourth gear 25 to shift down a gear.

With that, it becomes the meshing condition of FIG. 15.

In this way, the present embodiment has characteristic in different modes of transitions for the meshing in the shift-up and the shift down. This is based on that the shift rings 61 and 63 of the upper stage and lower stage are independent and on linking shapes of the shift grooves 125 and 123 of the cylindrical cam 119.

### [SHIFT-UP FOUTH SPEED→FIFTH SPEED]

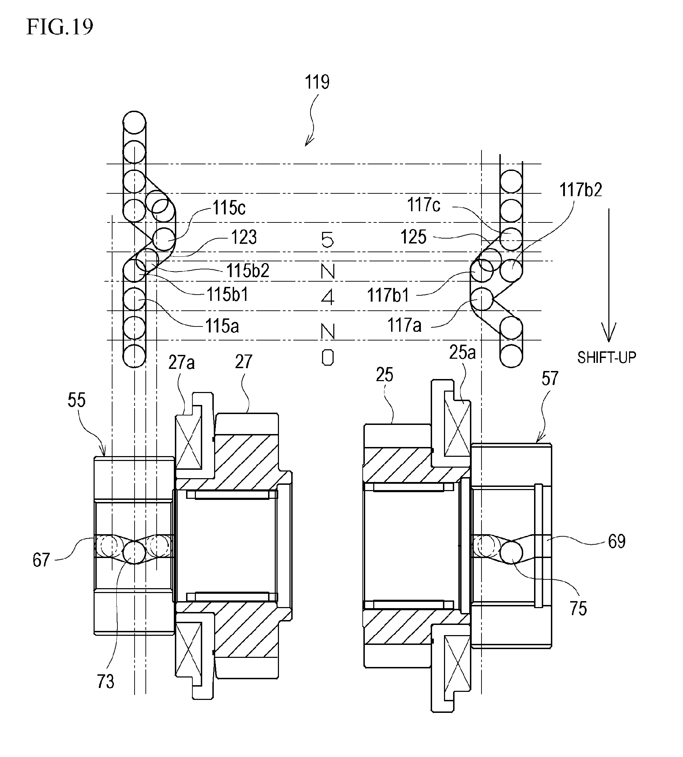

A mechanism for such different shifting modes in the shift-up and the shift down will be explained with reference to FIG. 19. FIG. 19 is an operation of drum grooves when shifting up or down a gear.

In the fourth speed illustrated in FIG. 15, the shift arm 117 and the shift arm 115 are at a position 117a and a position 115a in FIG. 19. If the shift drum 119 rotates frontward or downward in the drawing to shift up a gear, the shift arm 115 moves from a position 115b1 through a position 115b2 to a position 115c according to an inclined face 123a of the shift groove 123. At this time, the doubly-meshing is caused so that the shift arm 117 automatically moves to a position 117b2 from a position 117b1 due to the function of the inclined face of the cam groove 69 of the cam ring 57 and is shifted into neutral. Further, the shift arm moves into a position 117c according to the rotation of the shift drum 119. From the above, the shift-up from the fourth speed to the fifth speed is completed.

### [SHIFT-DOWN FIFTH SPEED→FOURTH SPEED]

During the meshing of the clutch in the fifth speed, the shift fork 117 is kept by the check part 133 at the neutral position as illustrated in FIG. 2. Even if the shift drum 119 rotates so that the shift groove 125 involves an axial looseness with respect to the shift arm 117 at the position 117b2 of FIG. 19, the shift arm 117 is kept by the aforementioned check part 133 at the neutral of the position 117b2.

On the other hand, the shift arm 115 is shifted from the position 115c to the position 115b1 so that both the clutches in the fourth speed and fifth speed become neutral as illustrated in FIG. 18.

If the shift drum 119 further rotates, the shift fork 117 is shifted from the position 117b2 to the position 117a, the clutch ring 63 meshes with the dog clutch 25a of the fourth gear 25, and the shift-down is completed as illustrated in FIG. 15.

### [MECHANISM FOR ABSORBING SHIFT SHOCK]

The mechanism for absorbing the shift shock due to the transmission control of the transmission 1003 and the starting clutch control will be explained in detail. In this case, shifting up into the fifth speed from the fourth speed will be explained for ease of explanation.

During the fourth speed, the fourth gear 25 and the main shaft 3 rotate at the same speed. The fifth gear 27 rotates more slowly than the main shaft 3.

In a standard transmission, when suddenly shifting up into a fifth speed in this situation, a fifth gear 27 instantly has the same rotation as a main shaft 3 to cause huge angular acceleration and shock torque.

In contrast, the seamless-shift transmission 1003 on which the embodiment is based does not generate such shock torque.

Namely, the clutch ring 61 is operated rightward in the drawings through the shift fork 85 to shift up a gear and simultaneously the shift ring 91 is operated leftward through the shift fork 87. Accordingly, the side of the cam grooves 69 connected to the main shaft 3 rotate faster due to the function of the inclined faces of the bent-shape cam grooves 69 and the moving speed of the projections 75 on the fourth speed side. With this, the rotation of the fourth gear 25 is slower than the rotation of the main shaft 3 and is closer to the rotation of the fifth gear 27.

On the other hand, the number of rotation of the projections 73 on the fifth speed side is reduced by the cam grooves 67 and the number of rotation of the fifth gear 27 that performs the same rotation as the projections 73 is closer to the rotation of the fourth gear 25. With the aforementioned operation, the synchronization effect is generated as mentioned above.

Further, if the clutch ring 63 on the fourth speed side keeps on moving, the projections 75 of the clutch ring 63 shift to the level portions of the cam grooves 69 to release the meshing of the fourth speed, and the clutch ring 63 on the fifth speed side performs the complete meshing so that the rotation of the fifth gear 27 becomes the same as the rotation of the main shaft 3 to terminate the gear shifting.

In this way, the shift shock is absorbed by the synchronization effect according to the projections 73 and 75 and the inclined faces of the bent-shape cam grooves 67 and 69 and by sliding friction between the projections 73 and 75 and the cam grooves 67 and 69 to allow the gear shifting to be smoothed.

Even in the seamless-shift transmission 1003, a slight shift shock resides at an initial stage of the gear shifting. In particular, if the number of revolutions of the engine is high and a difference in number of revolutions of the engine before and after the gear shifting is large, the shift shock may become large in the synchronization function of the cam grooves 65, 67, and 69 and the projections 71, 73, and 75.

Namely, when driving with the fourth gear 25, the fifth gear 27 rotates faster than the main shaft 3 according to gear ratio. According to the gear shifting from this state, a shifting operation is started on the fifth gear 27 side. The projections 73 on the fifth speed side are pushed against the concave-curved faces of the cam grooves 67 due to the driving torque, and the fifth gear 27 and the clutch ring 61 are instantly shifted from a relationship similar to FIG. 14(a) to a relationship similar to FIG. 14(b).

Accordingly, impact force is generated when the projections 73 on the fifth speed side are pushed against the concave-curved faces of the cam grooves 67, to produce the shift shock. The shock due to the impact is almost absorbed by the smooth guidance and friction of the projections 73 with the cam grooves 67 immediately. An instant shock, however, resides at the time of transition to the synchronization function according to the cam grooves 67 and the projections 73.

Then, it is configured to perform the aforementioned transmission control and starting clutch control.

Where, if the driving force of the main shaft 3 is instantly canceled, a shock is hardly generated and is largely reduced with absence of the driving force on the main shaft 3 when the projections 73 hit the concave faces of the cam grooves 67.

If the driving force is merely canceled, however, pushing force of the projections 73 relative to the concave faces of the cam grooves 67 is lost to momentarily delay start timing of the guide of the projections 73 with the concave faces of the cam grooves 67 involving the friction. This results in interruption of the torque.

Then, the pressure applied to the clutch is reduced until the starting clutch 1005 starts to slip in the fourth speed immediately before the gear shifting, to prevent further torque from being transmitted. Accordingly, no shock torque is generated to allow the gear shifting to be further smoothed even if the synchronization effect is somewhat insufficient.

Further, the main shaft 3 is connected to the crank shaft 1015 with the 100% connection of the starting clutch 1005 after the completion of the gear shifting to complete a sequence of the gear shifting operation.

Moreover, the connection of the starting clutch 1005 is completed in a situation where a difference in slip velocity of the starting clutch 1005 according to the shifting-stage is very small. This allows the gear shifting to be smoothed with little interruption of torque and a small shock.

Such an operation holds for shifting up from the first speed into the second speed, from the second speed into the third speed, from the third speed into the fourth speed, and from the fifth speed into the sixth speed, thereby to control slip velocity of the starting clutch so as to appropriately fulfill the synchronization function due to the cam grooves and the projections according to the shifting-stage.

### EXPLANATION OF REFERENCE NUMERALS

- 1001: Transmission control system
- 1003: Transmission
- 1005: Starting clutch
- 1007: Controller (controlling unit)
- 1009: Shift actuator
- 1011: Clutch actuator
- 1025: Input rotational speed sensor
- 1027: Output rotational speed sensor
- 3: Main shaft (Driving force transmission shaft)
- 5: Counter shaft (Driving force transmission shaft)
- 19: First gear (Shifting-gear)
- 21: Second gear (Shifting-gear)
- 23: Third gear (Shifting-gear)
- 25: Fourth gear (Shifting-gear)
- 27: Fifth gear (Shifting-gear)
- 29: Sixth gear (Shifting-gear)
- 47: First dog clutch
- 49: Second dog clutch
- 51: Third dog clutch
- 59, 61, 63: Clutch ring
- G: Guide part

## Claims

1. A transmission control system that shifts gears by switching dog clutches while transmitting driving force, comprising:
a starting clutch that transmits and outputs a torque from an engine according to fastening adjustment;
a transmission that selectively switches dog clutches for a plurality of stages of shifting-gears relatively rotatably supported with driving force transmission shafts to perform a transmission output on a transmitted output from the starting clutch;
a clutch actuator that performs the fastening adjustment to the starting clutch;
a shift actuator that switches the dog clutches according to a shift instruction signal;
an input rotational speed sensor that detects input rotational speed of the starting clutch and an output rotational speed sensor that detects output rotational speed of the starting clutch; and
a controlling unit that controls the clutch actuator according to an input of the shift instruction signal to reduce fastening force of the starting clutch and conducts the shift actuator to selectively switch the dog clutches when a difference is generated between the detected input rotational speed and the detected output rotational speed of the starting clutch.

2. The transmission control system according to claim 1, **characterized in that**
the controlling unit makes a transition from a start of reducing the fastening force of the starting clutch with the clutch actuator to a start of switching the dog clutches with the shift actuator under 1 second over 0 second.

3. The transmission control system according to claim 1 or 2, **characterized in that**
the controlling unit fixes the controlling of the clutch actuator when the difference is generated between the input rotational speed and the output rotational speed of the starting clutch until the switching is completed.

4. The transmission control system according to any one of claims 1 to 3, **characterized in that**
the dog clutches are provided with a plurality of clutch rings axially movable on the driving force transmission shafts, shifting-gears that take two speeds or more away from each other being arranged on both sides of each one clutch ring in the axial direction so that each one clutch ring selectively meshes with any one of the shifting-gears on the both sides to connect it with the driving force transmission shaft,
the shift actuator switches selectively-meshing of the clutch rings relative to the shifting-gears, and
guide parts are provided between the respective clutch rings and the driving force transmission shafts so that, when any one pair of the clutch rings simultaneously mesh with the respective shifting-gears of an upper stage and a lower stage, axial forces oriented in differential directions of a further-meshing-engagement direction and a meshing-release direction are generated on said respective shifting-gears of the upper stage and the lower stage.
